# EUROPÄISCHE PATENTSCHRIFT

(11) **EP 0 759 829 B1**
(45) Veröffentlichungstag und Bekanntmachung des Hinweises auf die Patenterteilung: **26.08.1998**
(21) Anmeldenummer: 94927616.6
(22) Anmeldetag: 14.09.1994
(51) Int. Cl.: B23K 9/29, H05H 1/34

(54) **VERFAHREN ZUM REINIGEN EINER VORRICHTUNG ZUM SCHUTZGASSCHWEISSEN**
PROCESS FOR CLEANING A DEVICE FOR WELDING UNDER PROTECTIVE GAS
PROCEDE DE NETTOYAGE D'UN DISPOSITIF DE SOUDAGE A L'ARC SOUS PROTECTION GAZEUSE

(30) Priorität: 14.09.1993 DE 4331100; 29.06.1994 EP 94110154
(43) Veröffentlichungstag der Anmeldung: 05.03.1997
(73) Patentinhaber: FRIEDRICH, Bernd, 87494 Rückholz (DE); Hug, Klaus-Dieter, 77972 Mahlberg-Orschweier (DE)
(72) Erfinder: HUG, Klaus-Dieter, D-77927 Mahlberg-Orschweier (DE)
(74) Vertreter: Strehl Schübel-Hopf & Partner
(86) Internationale Anmeldenummer: EP9403089
(87) Internationale Veröffentlichungsnummer: WO9507788

(56) Entgegenhaltungen:
- DE-A- 2 143 466
- US-A- 3 238 349
- US-A- 4 644 131

## Beschreibung

Die Erfindung betrifft ein Verfahren zum Reinigen einer Vorrichtung zum Schutzgasschweißen.

Dabei wird im folgenden ein den Schweißdraht führendes Teil der Vorrichtung als Düsenkörper und ein den Düsenkörper in einem Abstand umgebendes Teil als Hülse bezeichnet.

Die im Stand der Technik seit Jahrzehnten bekannte Ausbildung einer Vorrichtung zum Schutzgasschweißen, die auch heute noch vielfach im Einsatz ist, weist einen Düsenkörper auf, der in einem Abstand von einer Hülse umgeben ist. Diese bekannten Vorrichtungen zum Schutzgasschweißen haben den Nachteil, daß die beim Schweißvorgang entstehenden Schweißspritzer mit dem Düsenkörper verschweißen und so den Drahtvorschub stören oder sogar unterbrechen können, zum anderen führen sie aber auch bei stärkerer Verschmutzung im Innenbereich zwischen Düsenkörper und Hülse zu einer Brückenbildung, so daß eine Strombrücke zwischen dem stromführenden Düsenkörper und der nicht stromführenden Hülse entsteht. Berührt man dann mit der Hülse das Werkstück, so sind Beschädigungen unvermeidbar.

Zur Verhinderung einer solchen Brückenbildung muß daher der Innenraum dieser Schutzgasschweißbrenner in regelmäßigen Abständen gereinigt werden. Zur Reinigung sind vielseitige mechanische Reinigungswerkzeuge zum Ausschaben, Auskratzen, Ausfräsen und Ausbürsten im Einsatz, die es sowohl manuell für die Handschweißbrenner als auch für die Automatenschweißbrenner in mechanisierter oder automatisierter Form als Reinigungsstation gibt.

Bei den automatisierten Schutzgasschweißsystemen ist die Reinigungsstation in der Regel fest an einer Stelle im Arbeitsbereich des Schweißautomaten installiert. Das bedeutet, daß der Schweißbrenner zur Reinigungsstation gebracht werden muß. Dies ist jedoch nur bei den mehrachsigen dreidimensional beweglichen Schweißrobotern möglich und bedeutet hohe Investitions- und Wartungskosten. Bei einfacheren Schweißautomaten ist sogar immer noch die manuelle Reinigung erforderlich.

Durch die GB-2 035 174 A ist ein mit Wasserkühlung betriebener Automatenschweißbrenner bekannt, bei dem ein in etwa als Hülse ausgebildetes Teil aus im wesentlichen vier Abschnitten besteht, einem Endabschnitt mit Gaszufuhr, einem zentralen Abschnitt mit einer Kolben-Zylinder-Anordnung, einem vorderen Abschnitt und einem dort als Düse bezeichneten Mundstück. Am vorderen Bereich des Kolbenteils ist ein Abstreifkörper als Reinigungsteil angebracht, der mittels der Kolben-Zylinder-Anordnung bewegbar ist. Immer dann, wenn die Innenwandung des Mundstückes gereinigt werden soll, muß der Schweißvorgang unterbrochen werden und statt der beim Schweißen verwendeten Wasserkühlung wird nunmehr Druckluft zugeführt, durch die der den Abstreifkörper aufweisende Kolben in Richtung auf das Mundstück bewegt wird. Diese Unterbrechung des Schweißvorgangs geht als Produktionszeit verloren.

Durch das US 3 280 043 ist ein weiterer Automatenschweißbrenner bekannt, der einen metallischen Düsenkörper aufweist, der aus mehreren Teilen, nämlich einer Messinghülse, einem Abstreifkörper und einem sich verjüngenden Rohr besteht. Dieser Düsenkörper wird in einem Abstand von einer Hülse umgeben, die ihrerseits aus einem Messingträger und einem hiermit verschraubten, sich in Richtung auf die Öffnung der Hülse verjüngenden Mundstück besteht. Zum Reinigen dieses Automatenschweißbrenners wird ein Kolben betätigt, so daß die den Düsenkörper umgebende Hülse relativ zum Düsenkörper bewegt wird, bis der Düsenkörper nach außen über das offene Ende der Hülse hinausragt, wobei die Innenwandung der Hülse mittels des Abstreifkörpers in ihrem Endbereich gereinigt wird. Da bei diesem Reinigungsvorgang die Schutzgaszufuhr unterbrochen werden muß, um die Zufuhr von Druckluft zu ermöglichen, um die vom Abstreifkörper gelösten Partikel der Innenwandung der Hülse nach außen zu befördern, geht diese Zeit der Reinigung als Produktionszeit verloren. Außerdem ist die Reinigung der Innenwandung des Mundstücks nicht vollständig, sondern sogar nur in einem Teilbereich der Verjüngung durchführbar, da die weiteren Teilbereiche des Mundstücks nicht mit dem Abstreifkörper in Berührung kommen. Dadurch kann die Gefahr einer Brückenbildung und einer Störung der Gaszufuhr nicht vollständig vermieden werden.

Um den vorgenannten Nachteilen zu begegnen, wurden in jüngster Zeit Vorrichtungen zum Schutzgasschweißen entwickelt, deren Hülse an ihrem offenen Ende einen Schutzkörper aufweist, der aus Keramik oder einem anderen stromisolierenden Werkstoff bestehen kann. Der Schutzkörper weist in Form und Größe zumindest eines variable Öffnung auf, die den notwendigen Schweißdraht und Schutzgasaustritt ermöglichen. Dabei dient der Schutzkörper dazu, das Eindringen von Schweiß- und Metallspritzern zu verhindern. Damit wird der Gefahr, daß die Schweiß- oder Metallspritzer mit dem Düsenkörper verschweißen und den Drahtvorschub stören und die Gefahr einer Brückenbildung zwischen dem Düsenkörper und der Hülse wirksam unterbunden. Die Schweiß- und Metallspritzer bleiben nunmehr an der Außenseite des Schutzkörpers als kompakte Schicht leicht haften und lassen sich durch Abstreifen unproblematisch entfernen.

Es hat sich jedoch bei längerem Betrieb der Schutzgasschweißbrenner mit Schutzkörper gezeigt, daß die Schweiß- und Metallspritzer nicht nur an der Außenseite des Schutzkörpers haften bleiben, sondern in die Öffnung des Schutzkörpers, die den Austritt des Schweißdrahtes ermöglicht "hineinwachsen". Zur Reinigung dieser Schutzkörper sind zwar im Falle einer manuellen Reinigung keine besonderen nicht schon bekannten Werkzeuge zur Ablösung der Schweiß- und Metallspritzerschicht notwendig, die so erfolgte Reinigung erfordert aber eine Unterbrechung des eigentlichen Arbeitsvorganges und zum anderen einige Zeit. Im Falle des automatisierten Schweißens sind die vorhandenen und herkömmlichen Reinigungssysteme jedoch untauglich.

Der Erfindung liegt daher die Aufgabe zugrunde, ein leicht durchführbares Reinigungsverfahren, insbesondere von mit einem Schutzkörper ausgestatteten Schutzgasbrennern zu ermöglichen, das zum einen bei manueller Reinigung die zuvor genannten Nachteile beseitigt und zum anderen bei automatisierten Schweißen überhaupt erst das Reinigen gestattet und/oder das ohne wesentliche Unterbrechung des eigentlichen Schweißvorganges durchführbar ist.

Diese Aufgabe wird erfindungsgemäß durch die Kombination der Merkmale von Anspruch 1 gelöst. Dadurch, daß der Düsenkörper und die den Schutzkörper aufweisende Hülse mittels eines Bewegungsmittels gegeneinander verschiebbar angeordnet sind, befindet sich das Reinigungssystem bereits in der Vorrichtung zum Schutzgasschweißen selbst und wirkt von innen nach außen, in überraschend einfacher Weise. Das hat den Vorteil, daß keine zusätzlichen Werkzeuge, Reinigungssysteme oder sonstige Hilfsmittel von außen zugeführt oder innerhalb der Vorrichtung zum Schutzgasschweißen selbst vorgesehen werden müssen. Aufwendige und zeitraubende Programmierarbeiten, lange Fahrwege zum Reinigen und damit verbundener Produktionsausfall beim automatisierten Schweißen mit Robotern werden dadurch erheblich minimiert. Durch die erfindungsgemäße Reinigung wird ohne Änderung der Position des Schweißroboters innerhalb einer Schweißprozeßunterbrechung, die z.B. immer dann erfolgt, wenn der Schweißroboter an eine neue Schweißposition dirigiert wird, gereinigt. Auch bei manuell geführten Handschweißbrennern kann die Reinigung günstigerweise teilmechanisch oder vollmechanisch durchgeführt werden, wenn der Schweißbrenner von einer Schweißposition zu einer anderen wechselt. Somit geht die für die Reinigung benötigte Zeit nicht als Produktionszeit verloren.

Da der Verschleiß der zu reinigenden Brennerbauteile, insbesondere der äußeren Metallhülse an der Innenwandseite, durch das Werkzeug (Fräser, Schaber) bei jedem bisher bekannten Reinigungsvorgang zusätzlich beschleunigt wird, wirkt das erfindungsgemäße Verfahren auch diesem Nachteil des Standes der Technik entgegen.

Es liegt auch im Bereich der vorliegenden Erfindung, das erfindungsgemäße neuartige Reinigungsverfahren so auszugestalten, daß eine Reinigung der im Stand der Technik bekannten Vorrichtungen zum Schutzgasschweißen, die am offenen Ende der Hülse keinen Schutzkörper aufweisen, möglich wird. Dafür ist vorgesehen, daß zusätzlich zu dem erfindungsgemäßen Bewegungsmittel ein in Richtung auf das offene Ende der Hülse an deren Innenwandung im wesentlichen anliegender Abstreifkörper vorhanden ist, der eine Erstreckung aufweist, die im wesentlichen kleiner ist als die Erstreckung der Hülse zwischen dem Isolierkörper und dem offenen Ende der Hülse.

Das den Düsenkörper und die Hülse gegeneinander verschiebende Bewegungsmittel ist in einer Ausführungsform der erfindungsgemäßen Vorrichtung zum Schutzgasschweißen eine Feder. Diese Feder kann sich an das dem offenen Ende der Hülse entgegengesetzte Ende der Hülse anschließen. Dabei bestehen keine wesentlichen Beschränkungen hinsichtlich des Durchmessers der Feder. Zwischen der Feder und der Hülse kann ein Anschlag angeordnet sein, gegen dem sich die Feder abstützt. Dieser Anschlag kann beispielsweise eine Ringscheibe sein. Ein Zusammendrücken der Feder bewirkt nun, daß sich die Position des Düsenkörpers relativ zur Hülse dahingehend verändert, daß der Düsenkörper in Richtung auf das offene Ende der Hülse bewegt wird und dann, wenn die Feder ganz zusammengedrückt ist, maximal über das offene Ende der Hülse hinausragt. Beim Entlasten der Feder wird der Düsenkörper wieder in seine Ausgangsposition zurückgeführt. Während der Düsenkörper die Öffnung des Schutzkörpers passiert, entfernt er die an der Innenwand des Schutzkörpers bwz. der Hülse befindlichen Verunreinigungen, bestehend aus Schweiß- und Metallspritzern.

Um zu verhindern, daß während des Betätigens der Feder die Hülse selbst ihre Position verändert, kann vorgesehen sein, daß die Hülse in Richtung auf das der Feder zugewandte Ende in Umfangsrichtung Öffnungen aufweist und daß ein Haltemittel vorgesehen ist, das in zumindest eine der Öffnungen eingreift. Dadurch ist gewährleistet, daß die Hülse festgehalten wird und ihre Lage nicht verändern kann.

Es kann auch vorgesehen sein, daß die Feder innerhalb der Hülse, und zumindest im Bereich des Düsenkörpers angeordnet ist. Auch dann bewirkt ein Betätigen der Feder, daß sich die Position des Düsenkörpers relativ zur Hülse dahingehend verändert, daß der Düsenkörper in Richtung auf das offene Ende der Hülse verschoben wird, bis der Düsenkörper das offene Ende der Hülse überragt.

Dabei kann die Feder an der Innenwandung der Hülse zumindest teilweise anliegen. Dadurch wird die Bewegungsfreiheit des sich relativ zur Hülse verschiebenden Düsenkörpers nicht beeinträchtigt.

Bei einer weiteren Ausführungsform der erfindungsgemäßen Vorrichtung ist das Bewegungsmittel ein Gewinde. Dieses Gewinde kann an zumindest einem Teilbereich der Innenwandung der Hülse ausgebildet sein und mit einem weiteren Gewinde zusammenwirken, das sich im Innenbereich der Hülse befindet. Mittels eines solchen Gewindes kann das Verschieben des Düsenkörpers relativ zur Hülse beispielsweise dadurch bewirkt werden, daß die Hülse von außen gehalten wird und der Düsenkörper eine Drehbewegung erfährt, wodurch seine Position relativ zur Hülse in Richtung auf deren offenes Ende verschoben wird.

Es kann aber auch sein, daß das Gewinde an zumindest einem Teilbereich der Außenwandung der Hülse ausgebildet ist und mit einem weiteren Gewinde zusammenwirkt, daß sich im Außenbereich der Hülse befindet.

Dabei kann die Hülse gegenüber dem Düsenkörper oder dieser gegenüber der Hülse bewegt werden.

Damit bei der Anwendung des erfindungsgemäßen Verfahrens auf Vorrichtungen zum Schutzgasschweißen ohne Schutzkörper gewährleistet ist, daß der Abstreifkörper zusammen mit dem Düsenkörper bewegt werden kann, wenn das Bewegungsmittel betätigt wird, kann vorgesehen sein, daß der Abstreifkörper mit der in Richtung auf den Düsenkörper weisenden Begrenzung des Isolierkörpers verbunden ist. Der Abstreifkörper kann des weiteren einstückig mit dem Isolierkörper ausgebildet sein. Es kann des weiteren vorgesehen sein, daß die Wandung des Abstreifkörpers eine Dicke aufweist, die die Bildung eines Abstandes zwischen dem Abstreifkörper und dem Brennerkopf ermöglicht. Dies ist dafür wichtig, daß das Schutzgas ungehindert aus dem Brennerkopf austreten und in Richtung auf das offene Ende der Hülse strömen kann.

Unabhängig davon, welches der genannten Bewegungsmittel zur Ausführung des erfindungsgemäßen Verfahrens bei Vorrichtungen zum Schutzgasschweißen mit oder ohne Schutzkörper verwendet wird, ist es erforderlich, daß dieses Bewegungsmittel gerade so dimensioniert ist, daß es ein Verschieben des Düsenkörpers und der Hülse gegeneinander ermöglicht, bis der Düsenkörper nach außen über die Stirnwand des Schutzkörpers beziehungsweise nach außen über das offene Ende der Hülse hinausragt.

Außerdem kann das erfindungsgemäße Verfahren unbedenklich so oft wiederholt werden, bis die Stirnwand bzw. die Innenwandung keine Verunreinigungen mehr aufweist, da das erfindungsgemäße Reinigungsverfahren schnell und einfach durchführbar ist.

Bei der Verwendung einer Vorrichtung zum Schutzgasschweißen mit Schutzkörper sind zwei Ausführungsformen möglich.

In einer ersten Ausführungsform ist der Schutzkörper nichtmetallisch. Dabei kann der Schutzkörper aus einem Bornitrid-Mischkeramikmaterial bestehen, das zur Verringerung der Oberflächenhaftung Oxid- und/oder Carbidanteile aufweist.

In einer zweiten Ausführungsform kann der Schutzkörper jedoch auch metallisch und einstückig mit der Hülse ausgebildet sein. Dabei kann vorgesehen sein, daß sich an die Innenwandung der Hülse eine Wasserkühlung anschließt. Diese Wasserkühlung dient dann der Abführung der beim Schutzgasschweißen entstehenden Wärme. Vorzugsweise ist die Wasserkühlung als Rückflußkühlung ausgebildet, um das erwärmte Wasser stets abführen und durch neues kaltes Wasser ersetzen zu können.

Im folgenden wird die Erfindung anhand der Zeichnung näher erläutert.

Es zeigen:
- Fig. 1: eine unvollständig dargestellte, teilweise geschnittene Ansicht einer Ausführungsform eines erfindungsgemäß ausgebildeten Schweißbrenners,
- Fig. 2: eine unvollständig dargestellte, teilweise geschnittene Ansicht einer weiteren Ausführungsform eines erfindungsgemäß ausgebildeten Schweißbrenners,
- Fig. 3: eine unvollständig dargestellte, teilweise geschnittene Ansicht eines erfindungsgemäß ausgebildeten Schweißbrenners während des Reinigungsvorgangs und
- Fig. 4: eine unvollständig dargestellte, teilweise geschnittene Ansicht einer weiteren Ausführungsform eines erfindungsgemäß ausgebildeten Schweißbrenners für den bevorzugten Einsatz in einem Automatenschweißsystem.

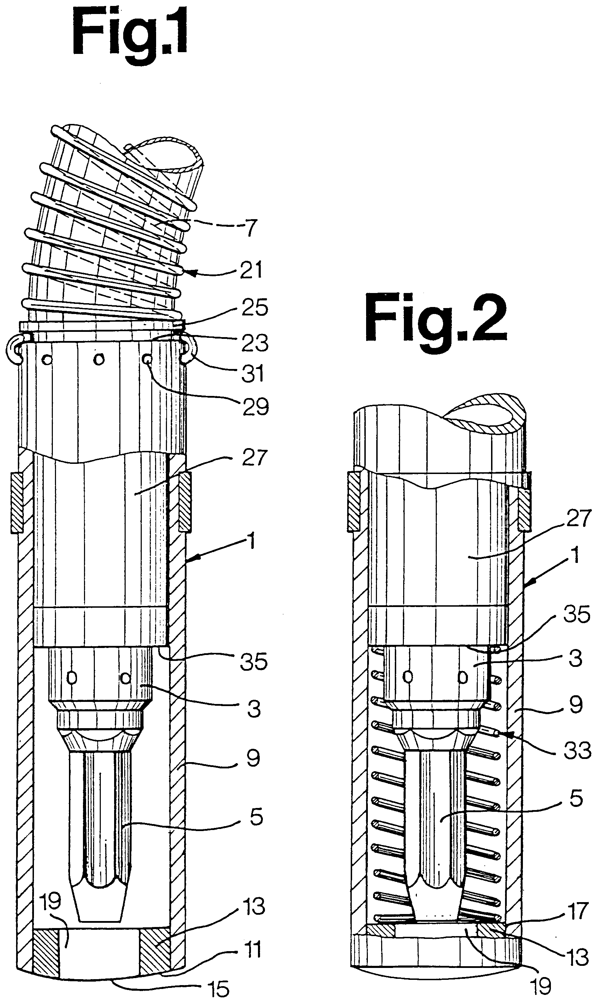

Der in Fig. 1 gezeigte Schweißbrenner (1) weist einen Brennerkopf 3 mit einem Düsenkörper 5 auf, durch den ein nicht dargestellter Schweißdraht zur Schweißstelle geführt wird. Der Vorschub befindet sich am Schweißgerät und erfolgt durch ein Schlauchpaket 7, in dem auch die elektrische Energie, der Schweißdraht und ein Schutzgas zum Brenner geführt wird. Der Brennerkopf 3 ist in einem Abstand von einer Hülse 9, die beispielsweise aus Kupfer ist, umgeben, so daß das Schutzgas in den hier als Ringkanal ausgebildeten Abstand zwischen Düsenkörper 5 und Hülse 9 austritt. Um das Eindringen von Schweiß und Metallspritzern in das Innere der Hülse 9 zu vermeiden, weist die Hülse 9 an ihrem offenen Ende 11 einen Schutzkörper 13 auf, der aus einer Stirnwand 15 und einem in das Innere der Hülse 9 ragenden Bund 17 besteht. Der Bund 17 kann auf unterschiedliche Weise mit der Hülse 9 verbunden sein. Zum einen kann er ein Außengewinde aufweisen, mit dem er in ein entsprechendes Innengewinde der Hülse 9 eingeschraubt ist. Er kann aber auch in das offene Ende der Hülse eingepreßt sein. Eine weitere Möglichkeit besteht darin, daß der Schutzkörper und die Hülse einstückig ausgebildet sind. In der Stirnwand 15 befindet sich eine Öffnung 19 des Schutzkörpers 13, dessen Durchmesser so ausgebildet ist, daß der Düsenkörper 5 die Öffnung passieren kann.

Der Schutzkörper 13 besteht vorzugsweise aus einem Bornitrid-Mischkeramikmaterial, zu dessen Eigenschaften Hochtemperaturfestigkeit, hoher elektrischer Widerstand, gute Wärmeleitfähigkeit und eine geringe Benetzungsfähigkeit gehören. Durch zusätzliche Anteile an Boriden, wie beispielsweise Titanborid und/oder Oxiden, wie beispielsweise Zirkonoxid und/oder Carbiden, wie beispielsweise Siliziumcarbid lassen sich die Eigenschaften des Schutzkörpers 13 weiterhin verbessern, mit dem Erfolg, daß Schweiß- und Metallspritzer die von der Schweißstelle zurückgeschleudert werden, im Gegensatz zu den seit Jahrzehnten gebräuchlichen Schutzgasbrennern ohne Schutzkörper 13 zu einem geringerem Teil anhaften. Die noch anhaftenden Metallreste lassen sich zwar durch Abstreifen gut entfernen, geschieht dies jedoch bei längerer Schweißdauer nicht rechtzeitig, so kann es zu einer Anhäufung dieser Metallreste kommen, die dann in die Öffnung 19 des Schutzkörpers 13 hineinwachsen.

Zur Entfernung dieser Verunreinigungen weist der Schutzgasbrenner gemäß Fig. 1 eine Feder 21 auf, die sich an das dem offenen Ende 11 der Hülse 9 entgegengesetzte Ende 23 anschließt. Dabei bestehen grundsätzlich keine wesentlichen Beschränkungen hinsichtlich des Durchmessers der Feder 21. Zwischen der Feder 21 und der Hülse 9 ist eine Ringscheibe 25 angeordnet, die als Anschlag für die Feder dient. Dabei sind die als Anschlag verwendbaren Mittel nicht auf die Ringscheibe begrenzt. Im Bereich des dem offenen Ende 11 der Hülse 9 entgegengesetzten Endes 23 sitzt die Hülse 9 auf einem Isolierkörper 27, der sich im wesentlichen bis zum Brennerkopf 3 erstreckt. Damit die Hülse dann, wenn die Feder betätigt wird, um den Düsenkörper 5 relativ zur Hülse 9 in Richtung auf das offene Ende 11 der Hülse 9 zu verschieben, und besonders beim anschließenden Entspannen der Feder 21 in ihrer Stellung bleibt, weist die Hülse 9 in Richtung auf das der Feder 21 zugewandte Ende 23 in Umfangsrichtung Öffnungen 29 auf, in die ein Haltemittel 31 eingreifen kann. Dieses Haltemittel kann eine Feststellschraube sein, es kann sich hierbei aber auch um eine Feder handeln, die jeweils in einander gegenüberliegende Öffnungen 29 eingreift und die Hülse 9 am Isolierkörper 27 hält. Die Ausbildung der erfindungsgemäßen Vorrichtung ist jedoch nicht auf die vorgenannten Mittel zur Arretierung der Hülse 9 auf der Isolierung 27 beschränkt. Es kann vielmehr auch möglich sein, daß die Hülse 9 keine Öffnungen 29 in Umfangsrichtung aufweist, sondern daß beispielsweise die als Anschlag dienende Ringscheibe 25 einen Bund aufweist, der in die Hülse eingreift.

In Fig. 2 ist eine Ausführungsform der erfindungsgemäßen Vorrichtung dargestellt, bei der die Feder 33 innerhalb der Hülse 9 angeordnet ist. Die Feder 33 hat eine Erstreckung von der in Richtung auf das offene Ende 11 der Hülse 9 gerichteten Begrenzung 35 des Isolierkörpers 27 bis zu der in das Innere der Hülse 9 weisenden Begrenzung des Schutzkörpers 13. Die Feder 33 liegt zumindest teilweise an der Innenwandung der Hülse 9 an, in der Weise, daß sie zwar betätigt werden kann, andererseits aber den Schutzgasfluß und den Düsenkörper 5 nicht behindert.

Die Federn 21, 33 können in der üblichen und einem Fachmann geläufigen Art und Weise betätigt werden. Dies kann bei handbetriebenen Schutzgasbrennern zum einen teilmechanisch geschehen, aber auch vollmechanisch über Zylinder, pneumatische und sonstige Bewegungssysteme. Bei den automatisierten Schweißrobotern werden die Federn, gesteuert durch das entsprechende Computerprogramm, durch die Roboter betätigt. Bei den in zwei Richtungen wirkenden Bewegungssystemen sind die Federn 21, 33 jedoch entbehrlich.

In einer anderen Ausführungsform der Erfindung, die in den Figuren nicht mehr dargestellt ist, werden die Federn 21 oder 33 durch ein Gewinde als Bewegungsmittel ersetzt. Dabei kann an der Innenwandung der Hülse ein Gewinde ausgebildet sein, das mit einem weiteren Gewinde im Innenbereich der Hülse zusammenwirkt. Während des Reinigungsvorganges kann dann die Hülse 9 festgehalten werden, was manuell wie automatisch möglich ist, um anschließend den Düsenkörper 5 über Drehbewegungen, die mittels des Gewindes ausgeführt werden, relativ zur Hülse 9 in Richtung auf deren offenes Ende 11 zu verschieben.

Das Gewinde kann auch an der Außenwandung der Hülse ausgebildet sein, wobei es dann mit einem weiteren Gewinde im Außenbereich der Hülse 9 zusammenwirkt.

Dieses weitere Gewinde kann am Bund der Ringscheibe 25, die gleichzeitig als Anschlagmittel dient, ausgebildet sein. In diesem Fall würde sich die Relativbewegung des Düsenkörpers 5 gegenüber der Hülse 9 dadurch ergeben, daß nicht der Düsenkörper 5, sondern die Hülse 9 bewegt wird. Es wird an dieser Stelle ausdrücklich darauf hingewiesen, daß es im Rahmen der vorliegenden Erfindung möglich ist, daß sowohl der Düsenkörper 5 unbewegt bleibt und die Hülse 9 bewegt werden kann, als auch umgekehrt.

Der Düsenkörper 5 des Schutzgasbrenners kann zum einen so angeordnet sein, daß er im wesentlichen knapp oberhalb des Schutzkörpers 13 endet, wie dies in den Figuren 1 und 2 dargestellt ist. Es ist aber auch möglich, daß der Düsenkörper 5 im wesentlichen im Bereich des offenen Endes 11 der Hülse 9 endet. Dies ist insbesondere bei automatisierten Schweißrobotern vorteilhaft, da dann die seit Jahrzehnten üblichen Schweißbrenner ohne Schutzkörper 13 ohne Änderung des Betriebsprogrammes der Roboter ersetzt werden können durch Schweißbrenner mit Schutzkörper 13, entweder mit oder ohne erfindungsgemäßes Reinigungssystem.

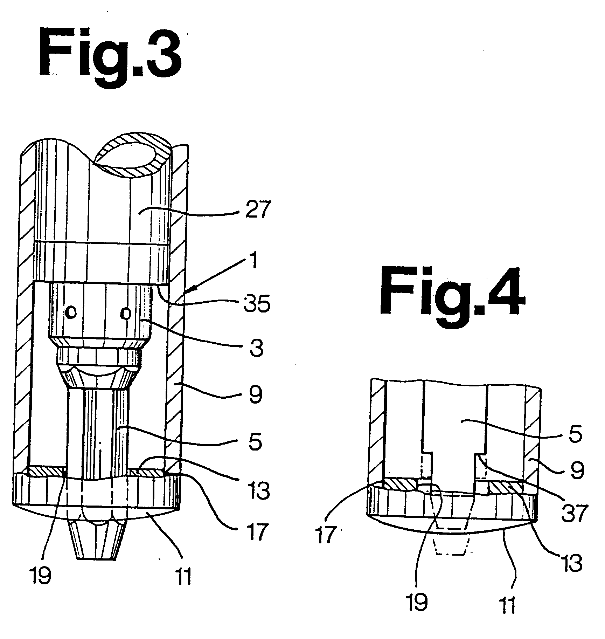

Die Reinigung der Öffnung 19 des Schutzkörpers 13 erfolgt dadurch, daß die Federn 21 oder 33 oder das Gewinde oder ein sonstiges gleichwirkendes Bewegungsmittel in der oben beschriebenen Weise betätigt wird, wodurch der Düsenkörper 5 relativ zur Hülse 9 in Richtung auf deren offenes Ende bewegt wird. Dabei sind die Federn 21 oder 33 oder das Gewinde so dimensioniert, daß der Düsenkörper 5 die Öffnung 29 in der Stirnwand 15 des Schutzkörpers 13 passieren und nach außen über die Stirnwand 15 hinausragen kann. Dies ist in Fig. 3 dargestellt. Während des Verschiebens des Düsenkörpers 5 gegenüber der Hülse 9 oder umgekehrt hat der Düsenkörper 5 beim Passieren der Öffnung 19 des Schutzkörpers 13 dort befindliche Schweiß- und Metallspritzer entfernt. Aufgrund des besonderen Materials des Schutzkörpers 13 ist, wie schon eingangs erwähnt, die Haftung der Verunreinigungen auf der Innenwandung der Öffnung 19 gegenüber beispielsweise Metall verringert, so daß die Verunreinigungen im wesentlichen leicht entfernbar sind und nicht die Gefahr besteht, daß durch einen zu großen Kraftaufwand der Düsenkörper 5 beschädigt wird.

Anschließend wird der Düsenkörper 5 wieder in seine Ausgangsstellung, die gleichzeitig seine Arbeitsstellung beim Schweißvorgang ist, zurückgebracht. Der Reinigungsvorgang kann bei Bedarf wiederholt werden, bis die Verunreinigungen an der Öffnung 19 des Schutzkörpers 13 vollständig entfernt worden sind.

Dadurch, daß der Düsenkörper 5 selbst zur Reinigung der Öffnung 19 des Schutzkörpers 13 dient, der Reinigungsvorgang also von innen nach außen gerichtet ist, kann die Reinigung des Schutzgasbrenners 1 zu jeder beliebigen Zeit schnell durchgeführt werden, vorzugsweise dann, wenn der Schweißbrenner 1 von einer Arbeitsposition in eine andere gebracht wird. Dies ist ein erheblicher Vorteil gegenüber den herkömmlichen Reinigungssystemen, da bei ihnen der Reinigungsvorgang immer von außen nach innen gerichtet und nur mittels eines zusätzlichen Werkzeugs durchführbar war. In den Fig. 1 bis 3 ist der Düsenkörper 5 in seiner im allgemeinen üblichen Form dargestellt. Er kann aber auch eine Gestaltung aufweisen, wie in Fig. 4 dargestellt. Dabei verjüngt sich der Durchmesser des Düsenkörpers 5 in Richtung auf sein Ende, d.h. auf den Austritt des Schweißdrahtes hin unter Bildung eines Absatzes 37. Diese Ausführungsform wird bevorzugt in Automatensystemen eingesetzt, wenn Bedingung ist, daß der Düsenkörper mit dem offenen Ende 11 der Hülse 9 im wesentlichen abschließen soll. Der verjüngte Durchmesser des Düsenkörpers 5 dient dann dazu, den ungehinderten Austritt des Schutzgases zu ermöglichen. Zur Reinigung der Öffnung 19 des Schutzkörpers 13 dient dann die durch den Absatz 37 erweiterte Form des Düsenkörpers.

Eine weitere in den Fig. nicht dargestellte Ausführungsform unterscheidet sich von der ersten Ausführungsform dadurch, daß der Schutzkörper 13 metallisch und vorzugsweise einstückig mit der Hülse 9 ausgebildet ist. Der metallische Schutzkörper 13 kann aber auch als separates Teil mit der Hülse 9 verbunden sein, wie dies oben bereits bei dem Schutzkörper 13 beschrieben worden ist. Da beim Schutzgasschweißen eine große Wärme erzeugt wird, ist bei dieser Ausführungsform vorgesehen, daß sich an die Innenwandung der Hülse 9 eine Wasserkühlung anschließt. Die in Richtung auf den Düsenkörper 5 weisende Wandung der Wasserkühlung weist zusätzlich eine Isolierung auf. Des weiteren ist die Wasserkühlung in Form einer Rückflußkühlung ausgebildet. Dies ist dadurch möglich, daß das Wasser mittels einer in der Zeichnung nicht dargestellten Trennwand zwangsgeführt wird. Die Trennwand ist vorzugsweise als Frästeil gefertigt und aus Kupfer oder Messing gebildet. Dadurch kann das erwärmte Wasser abgeführt und stets durch kaltes Wasser ersetzt werden. Die Zuführung und Abführung des Wassers geschieht in an sich bekannter Weise über das Schlauchpaket. Zusätzlich kann der Düsenkörper 5 von einer Isolierung umgeben sein. Es kann nur der Düsenkörper 5 eine Isolierung, beispielsweise in Form einer Isolierhülse aufweisen.

Das erfindungsgemäße Reinigungsprinzip kann nicht nur bei Schweißbrennern 1 mit Hülsen 9, die einen Schutzkörper 13 aufweisen, angewendet werden. Grundsätzlich ist das Prinzip "von innen nach außen" auch auf die seit Jahrzehnten üblichen Schweißbrenner mit Hülsen 9 ohne Schutzkörper 13 übertragbar. Dies soll im folgenden prinzipiell erläutert werden, ist aber in den Figuren nicht mehr dargestellt. Zur Übertragung des erfindungsgemäßen Reinigungsprinzips auf Hülsen ohne Schutzkörper ist es notwendig, daß in die Hülse ein an deren Innenwandung im wesentlichen anliegender Abstreifkörper eingebracht wird. Dieser Abstreifkörper weist eine Erstreckung auf, die im wesentlichen kleiner ist als die Erstreckung der Hülse zwischen dem Isolierkörper 27 und dem offenen Ende 11 der Hülse 9. Der Abstreifkörper kann mit der in Richtung auf den Düsenkörper 5 weisenden Begrenzung des Isolierkörpers 27 verbunden sein. Dabei darf der Abstreifkörper nur eine solche Dicke aufweisen, die gewährleistet, daß sich ein Ringspalt zwischen dem Abstreifkörper und dem Brennerkopf 3 bildet, damit das Schutzgas ungehindert aus dem Brennerkopf 3 ausströmen kann.

Er kann auch über ein Gewinde mit dem Brennerkopf 3 verbunden sein. Damit gewährleistet ist, daß das Schutzgas trotzdem ungehindert aus dem Brennerkopf 3 austreten und in Richtung auf das offene Ende 11 der Hülse 9 strömen kann, ist in diesem Fall vorzugsweise eine Sternform des Gewindes des Abstreifkörpers vorgesehen.

Der Abstreifkörper ist innen isoliert, er kann aber auch selbst aus einem isolierenden Werkstoff bestehen, z.B. kann er einstückig mit der Isolierung verbunden sein. Als Bewegungsmittel können hier zum einen eine Feder gemäß Feder 21 nach Fig. 1, Feder 33 nach Fig. 2, oder ein Gewinde dienen.

## Patentansprüche

1. Metall-Schutzgas-Schweißvorrictung mit einer Reinigungseinrichtung, umfassend einen Isolierkörper (27), einen sich daran anschließenden Brennerkopf (3), einen metallischen Düsenkörper (5) und eine diesen in Abstand umgebende Hülse (9) mit einem an ihrem offenen Ende angeordneten Schutzkörper (13), wobei der Düsenkörper (5) und die den Schutzkörper (13) aufweisende Hülse (9) linear oder drehbar gegeneinander verschiebbar sind.

2. Vorrichtung nach Anspruch 1, wobei an dem Isolierkörper (27) in Richtung auf das offene Ende (11) der Hülse (9) ein Abstreifkörper angeordnet ist, der mit dem Isolierkörper (27) bewegbar ist und an der Innenwand der Hülse (9) im wesentlichen anliegt, und dessen axiale Länge kleiner ist als die Erstreckung der Hülse (9) zwischen dem Isolierkörper (27) und ihrem offenen Ende (11).

3. Vorrichtung nach Anspruch 1 oder 2, wobei der Schutzkörper (13) am offenen Ende der Hülse (9) angebracht oder einstückig mit der Hülse (9) ausgebildet ist.

4. Vorrichtung nach einem der Ansprüche 1 bis 3, mit einer Feder (21; 33) zur Erzeugung der Relativbewegung zwischen Düsenkörper (5) und Hülse (9).

5. Vorrichtung nach Anspruch 4, wobei sich die Feder (21) an das dem offenen Ende (11) der Hülse (9) entgegengesetzte Ende (23) der Hülse (9) anschließt.

6. Vorrichtung nach Anspruch 5, wobei zwischen der Feder (21) und der Hülse (9) ein vorzugsweise als Ringscheibe (25) ausgebildeter Anschlag angeordnet ist.

7. Vorrichtung nach einem der Ansprüche 4 bis 6, wobei die Feder (21) über ein Haltemittel (31) fixiert ist, das in eine in der Hülse (9) vorgesehene Öffnung (29) eingreift.

8. Vorrichtung nach Anspruch 4, wobei die Feder (33) im Bereich des Düsenkörpers (5) innerhalb der Hülse (9) angeordnet ist und vorzugsweise an der Innenwand der Hülse (9) zumindest teilweise anliegt.

9. Vorrichtung nach einem der Ansprüche 1 bis 3, mit einem Schraubgetriebe zur Erzeugung der Relativbewegung zwischen Düsenkörper (5) und Hülse (9).

10. Vorrichtung nach einem der Ansprüche 2 bis 9, wobei der Abstreifkörper an einer in Richtung des Düsenkörpers (5) weisenden Begrenzung (35) des Isolierkörpers (27) angeordnet, vorzugsweise mit dem Isolierkörper (27) einstückig ausgebildet, ist.

11. Vorrichtung nach einem der Ansprüche 2 bis 10, wobei der Abstreifkörper einen Abstand zum Brennerkopf (3) hält.

12. Vorrichtung nach einem der vorhergehenden Ansprüche, wobei der Düsenkörper (5) relativ zu der Hülse (9) so weit verschiebbar ist, bis er über das offene Ende (11) der Hülse (9) bzw. die Stirnwand (15) des Schutzkörpers (13) hinausragt.

13. Vorrichtung nach einem der vorhergehenden Ansprüche, wobei der Schutzkörper (13) aus nicht-metallischem Material, vorzugsweise einer Oxid- und/oder Carbidanteile aufweisenden Bornitrid-Mischkeramik, besteht.

14. Vorrichtung nach einem der vorhergehenden Ansprüche, wobei der Schutzkörper (13) einstückig ausgebildet ist.

15. Vorrichtung nach einem der vorhergehenden Ansprüche, mit einer sich an die Innenwand der Hülse (9) anschließenden, vorzugsweise als Rückflußkühlung ausgebildeten Wasserkühlung.

16. Verfahren zum Reinigen einer Metall-Schutzgas-Schweißvorrichtung, die einen Isolierkörper (27), einen sich daran anschließenden Brennerkopf (3), einen metallischen Düsenkörper (5) und eine diesen in Abstand umgebende Hülse (9) mit einem an ihrem offenen Ende angeordneten Schutzkörper (13) aufweist, wobei die Reinigung dadurch bewirkt wird, daß der Düsenkörper (5) und die den Schutzkörper (13) aufweisende Hülse (9) durch Linear- oder Drehbewegung gegeneinander verschoben werden.

## Claims

1. An apparatus for welding metal under protective gas including a cleaning device, comprising an insulating body (27), a torch head (3) arranged next to the insulating body, a metallic nozzle head (5) and a sleeve (9) surrounding the nozzle body with a spacing therebetween and having a protective body (13) disposed at its open end, wherein the nozzle body (5) and the sleeve (9) with the protective body (13) are linearly or rotatably movable with respect to each other.

2. The apparatus of claim 1, wherein a stripper member is disposed on the insulating body (27) toward the open end (11) of the sleeve (9), the stripper member being movable with the insulating body (27) and essentially contacting the inner wall of the sleeve (9), the axial length of the stripper member being smaller than the length of the sleeve (9) between the insulating body (27) and its open end (11).

3. The apparatus of claim 1 or 2, wherein the protective body (13) is disposed at the open end of the sleeve (9) or formed integrally with the sleeve (9).

4. The apparatus of any of the claims 1 to 3, including a spring (21; 33) for creating the relative movement between the nozzle body (5) and the sleeve (9).

5. The apparatus of claim 4, wherein the spring (21) is arranged next to the end (23) of the sleeve (9) which is opposite the open end (11) thereof.

6. The apparatus of claim 5, wherein a stop, preferably formed as an annular disk (25), is disposed between the spring (21) and the sleeve (9).

7. The apparatus of any of claims 4 to 6, wherein the spring (21) is fixed by retaining means (31) engaging an opening (29) in the sleeve (9).

8. The apparatus of claim 4, wherein the spring (33) is disposed in the region of the nozzle body (5) within the sleeve (9) and preferably contacts at least part of the inner wall of the sleeve (9).

9. The apparatus of any of claims 1 to 3, including an screw thread for creating the relative movement between the nozzle body (5) and the sleeve (9).

10. The apparatus of any of claims 2 to 9, wherein the stripper member is disposed at a confinement (35) of the insulating body (27) toward the nozzle body (5) and is preferably formed integrally with the insulating body (27).

11. The apparatus of any of claims 2 to 10, wherein the stripper member is at a spacing from the torch head (3).

12. The apparatus of any preceding claim wherein the nozzle body (5) is movable relatively to the sleeve (9) to such an extent that it projects from the open end (11) of the sleeve (9) or from the end wall (15) of the protective body (13).

13. The apparatus of any preceding claim, wherein the protective body (13) consists of a non-metallic material, preferably a boron nitride ceramic composite material containing oxide and/or carbide.

14. The apparatus of any preceding claim, wherein the protective body (13) is formed in one piece.

15. The apparatus of any preceding claim, including a water cooling arranged next to the inner wall of the sleeve (9) and being preferably formed as a reflux cooler.

16. A method for cleaning an apparatus for welding metal under protective gas, comprising an insulating body (27), a torch head (3) arranged next to the insulating body, a metallic nozzle body (5), and a sleeve (9) surrounding the nozzle body with a spacing therebetween and having a protective body (13) disposed at its open end, wherein the cleaning is effected by linearly or rotatably moving the nozzle body (5) and the sleeve (9) with the protective body (13) relative to each other.

## Revendications

1. Dispositif de soudage à électrode métallique sous protection gazeuse avec un dispositif de nettoyage comprenant un corps isolant (27), une tête de chalumeau (3) se raccordant à celui-ci, un corps de buse (5) métallique et une douille (9) entourant celui-ci à distance, avec un corps de protection (13) disposé à son extrémité ouverte, le corps de buse (5) et la douille (9) présentant le corps de protection (13), étant déplaçables linéairement ou de manière rotative l'un par rapport a l'autre.

2. Dispositif selon la revendication 1, dans lequel est disposé, sur le corps isolant (27) en direction de l'extrémité ouverte (11) de la douille (9) un corps de raclage, qui est déplaçable avec le corps isolant (27) et qui s'applique sensiblement contre la paroi intérieure de la douille (9) et dont la longueur axiale est inférieure à l'extension de la douille (9) entre le corps isolant (27) et son extrémité ouverte (11)

3. Dispositif selon la revendication 1 ou 2, dans lequel le corps de protection (13) est appliqué à l'extrémité ouverte de la douille (9) ou est réalise d'une seule pièce avec la douille (9).

4. Dispositif selon l'une des revendications 1 à 3, avec un ressort (21;33) destiné à produire le déplacement relatif entre le corps de buse (5) et la douille (9).

5. Dispositif selon la revendication 4, dans lequel le ressort (21) se raccorde à l'extrémité (23) de la douille (9) opposée à l'extrémité ouverte (11) de la douille (9).

6. Dispositif selon la revendication 5, dans lequel une butée, se présentant de préférence sous la forme d'un disque annulaire (25), est disposée entre le ressort (21) et la douille (9).

7. Dispositif selon l'une des revendications 4 à 6, dans lequel le ressort (21) est fixé par un moyen de maintien (31), qui s'engage dans une ouverture (29) prévue dans la douille (9).

8. Dispositif selon la revendication 4, dans lequel le ressort (33) est disposé dans la zone du corps de buse (5) à l'intérieur de la douille (9) et s'applique de préférence, au moins partiellement, contre la paroi intérieure de la douille (9).

9. Dispositif selon l'une des revendications 1 à 3, avec un entraînement à vis destiné à produire le déplacement relatif entre le corps de buse (5) et la douille (9).

10. Dispositif selon l'une des revendications 2 à 9, dans lequel le corps de raclage est disposé sur une portée d'extrémité (35) du corps isolant (27), orientée en direction du corps de buse (5), et est de préférence réalisé d'une seule pièce avec le corps isolant (27).

11. Dispositif selon l'une des revendications 2 à 10, dans lequel le corps de raclage maintient une distance par rapport à la tête de chalumeau (3).

12. Dispositif selon l'une des revendications précédentes dans lequel le corps de buse (5) est déplaçable par rapport à la douille (9) suffisamment loin pour dépasser de l'extrémité ouverte (11) de la douille (9) ou de la paroi frontale (15) du corps de protection (13).

13. Dispositif selon l'une des revendications précédentes, dans lequel le corps de protection (13) est fait d'un matériau non métallique, de préférence d'une céramique mixte de nitrure de bore, comportant des pourcentages d'oxyde et/ou de carbure.

14. Dispositif selon l'une des revendications précédentes, dans lequel le corps de protection (13) est réalisé d'une seule pièce.

15. Dispositif selon l'une des revendications précédentes, avec un refroidissement à eau conçu de préférence en tant que refroidissement de reflux, se raccordant à la paroi intérieure de la douille (9).

16. Procédé de nettoyage d'un dispositif de soudage à électrode métallique sous protection gazeuse, qui comporte un corps isolant (27), une tête de chalumeau (3) se raccordant à celui-ci, un corps de buse (5) métallique et une douille (9) entourant celui-ci à distance, avec un corps de protection (13) disposé à son extrémité ouverte, le nettoyage étant effectué en déplaçant le corps de buse (5) et la douille (9) présentant le corps de protection (13), l'un par rapport à l'autre par mouvement linéaire ou mouvement de rotation.
